# EUROPEAN PATENT APPLICATION

(11) **EP 4 757 342 A1**
(43) Date of publication of application: **10.06.2026**
(21) Application number: 25206600.6
(22) Date of filing: 03.10.2025
(51) Int. Cl.: H04R 3/00

(54) **MICROPHONE CONTROL SYSTEM AND METHOD, AND TERMINAL DEVICE**

(30) Priority: 06.12.2024 CN 202411795482
(71) Applicant: Beijing Zitiao Network Technology Co., Ltd., Beijing 100190 (CN)
(72) Inventor: DU, Peng, Beijing, 100028 (CN)
(74) Representative: Marks & Clerk LLP

(57) **Abstract**

A microphone control system includes: a first switch and an audio processor; wherein a first selection terminal of the first switch is configured to be connected to a first microphone; a second selection terminal of the first switch is configured to be connected to a second microphone; a common terminal of the first switch is connected to a first microphone interface of the audio processor; the first switch is configured to receive a first switching control signal, under control of which the first selection terminal is connected to the common terminal to send a first audio signal received by the first microphone to the audio processor; and the first switch is further configured to receive a second switching control signal, under control of which the second selection terminal is connected to the common terminal to send a second audio signal received by the second microphone to the audio processor.

## Description

### TECHNICAL FIELD

Embodiments of the present disclosure relate to the field of intelligent terminal technologies, and in particular, to a microphone control system and method, and a terminal device.

### BACKGROUND

With the emergence of artificial intelligence (AI) large models, voice input capability of intelligent terminals has become a crucial trend and feature.

### SUMMARY

According to a first aspect, an embodiment of the present disclosure provides a microphone control system, which includes: a first switch and an audio processor; where
the audio processor includes a first microphone interface; the first switch includes a first selection terminal, a second selection terminal, and a common terminal;
the first selection terminal of the first switch is configured to be connected to a first microphone; the second selection terminal of the first switch is configured to be connected to a second microphone; the common terminal of the first switch is connected to the first microphone interface of the audio processor;
the first microphone is configured to receive a first audio signal;
the second microphone is configured to receive a second audio signal;
the first switch is configured to receive a first switching control signal, where under control of the first switching control signal, the first selection terminal of the first switch is connected to the common terminal to send the first audio signal to the audio processor; and
the first switch is further configured to receive a second switching control signal, where under control of the second switching control signal, the second selection terminal of the first switch is connected to the common terminal to send the second audio signal to the audio processor.

According to a second aspect, an embodiment of the present disclosure provides a terminal device, which includes: the microphone control system according to the first aspect and various possible designs of the first aspect.

According to a third aspect, an embodiment of the present disclosure provides a microphone control method, applied to a microphone control system, where the system includes: a first switch and an audio processor; where the audio processor includes a first microphone interface; the first switch includes a first selection terminal, a second selection terminal, and a common terminal; the first selection terminal of the first switch is configured to be connected to a first microphone; the second selection terminal of the first switch is configured to be connected to a second microphone; the common terminal of the first switch is connected to the first microphone interface of the audio processor; the first microphone is configured to receive a first audio signal; and the second microphone is configured to receive a second audio signal; and the method includes:
receiving a first switching control signal by the first switch, where under control of the first switching control signal, the first selection terminal of the first switch is connected to the common terminal to send the first audio signal to the audio processor; and
receiving a second switching control signal by the first switch, where under control of the second switching control signal, the second selection terminal of the first switch is connected to the common terminal to send the second audio signal to the audio processor.

According to a fourth aspect, an embodiment of the present disclosure provides an electronic device, which includes: a processor and a memory; where
the memory stores computer-executable instructions;
the processor executes the computer-executable instructions stored in the memory, to cause the processor to perform the microphone control method according to the third aspect and various possible designs of the third aspect.

According to a fifth aspect, an embodiment of the present disclosure provides a non-transitory computer-readable storage medium, where the computer-readable storage medium stores computer-executable instructions that, when executed by a processor, implement the microphone control method according to the third aspect and various possible designs of the third aspect.

According to a sixth aspect, an embodiment of the present disclosure provides a computer program product including a computer program that, when executed by a processor, implements the microphone control method according to the third aspect and various possible designs of the third aspect.

### BRIEF DESCRIPTION OF THE DRAWINGS

To describe the technical solutions in embodiments of the present disclosure or in the prior art more clearly, the accompanying drawings for describing the embodiments or the prior art are briefly described below. Apparently, the accompanying drawings in the following description are some embodiments of the present disclosure, and those of ordinary skill in the art may still derive other accompanying drawings from these accompanying drawings without creative efforts.
FIG. 1 is a first schematic structural diagram of a microphone control system according to an embodiment of the present disclosure;
FIG. 2 is a second schematic structural diagram of the microphone control system according to an embodiment of the present disclosure;
FIG. 3 is a third schematic structural diagram of the microphone control system according to an embodiment of the present disclosure;
FIG. 4 is a fourth schematic structural diagram of the microphone control system according to an embodiment of the present disclosure;
FIG. 5 is a fifth schematic structural diagram of the microphone control system according to an embodiment of the present disclosure;
FIG. 6 is a sixth schematic structural diagram of the microphone control system according to an embodiment of the present disclosure;
FIG. 7 is a schematic flowchart of a microphone control method according to an embodiment of the present disclosure; and
FIG. 8 is a schematic structural diagram of hardware of an electronic device according to an embodiment of the present disclosure.

### DETAILED DESCRIPTION

To make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

With the emergence of artificial intelligence (AI) large models, voice input capability of intelligent terminals has become a crucial trend and feature. In the future, with continuous technological advancements and continuously expanding application scenarios, the voice input capability of the intelligent terminals will become more intelligent, convenient, and user-friendly, bringing better use experience to users. Correspondingly, to enhance the voice input capability, the use of more microphones enables better voice input, implementing functions such as sensitive voice wake-up and higher-performance voice noise reduction.

Given the limited number of microphone interfaces provided by a hardware platform, how to conveniently connect more microphones is a technical problem that urgently needs to be solved currently.

Embodiments of the present disclosure provide a microphone control system and method, and a terminal device, to conveniently implement the connection of more microphones.

The embodiments provide a microphone control system and method, and a terminal device. The system includes: a first switch and an audio processor. The audio processor includes a first microphone interface. The first switch includes a first selection terminal, a second selection terminal, and a common terminal. The first selection terminal of the first switch is configured to be connected to a first microphone, the second selection terminal of the first switch is configured to be connected to a second microphone, and the common terminal of the first switch is connected to the first microphone interface of the audio processor. The first microphone is configured to receive a first audio signal. The second microphone is configured to receive a second audio signal. The first switch is configured to receive a first switching control signal, where under control of the first switching control signal, the first selection terminal of the first switch is connected to the common terminal to send the first audio signal to the audio processor. The first switch is further configured to receive a second switching control signal, where under control of the second switching control signal, the second selection terminal of the first switch is connected to the common terminal to send the second audio signal to the audio processor. According to the microphone control system provided in the embodiments of the present disclosure, the switch is provided, so that the microphone interface can be expanded despite the limited number of microphone channels in the audio processor, thereby accommodating connection of more microphones in a convenient, quick, and low-cost manner.

In the related art, an intelligent terminal device such as a mobile phone usually has 2 to 3 microphones for input. However, this cannot meet demands brought by the AI large models.

To solve the above-mentioned technical problem, the inventors of the present disclosure have found through research that a cause of the limitation preventing the intelligent terminal from incorporating more microphones lies in that a current audio processing chip can support only a specific number (for example, 5) of analog microphone interfaces at most, with one of these interfaces reserved for analog earphone support via a USB Type-C interface. Developing a new chip would incur excessively high costs. Further research by the inventors revealed that more microphones can be connected by providing a switch, for example, by adding a switch to switch between an analog earphone and a newly added microphone. Based on this, an embodiment of the present disclosure provides a microphone control system.

The technical solutions of the present application are described in detail below by using specific embodiments. The following several specific embodiments may be combined with each other, and the same or similar concepts or processes may not be repeated in some of the embodiments.

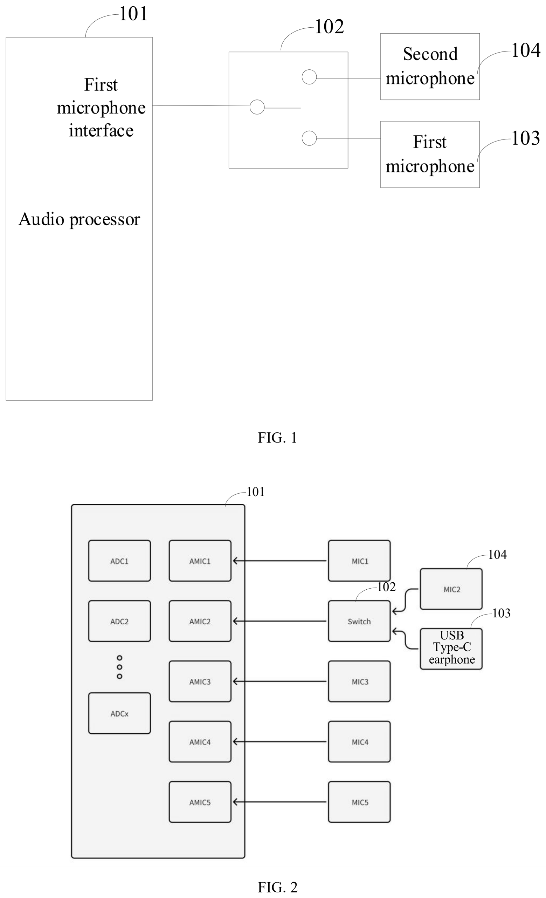

FIG. 1 is a first schematic structural diagram of a microphone control system according to an embodiment of the present disclosure. As shown in FIG. 1, the system includes: a first switch 102 and an audio processor 101.

The audio processor includes a first microphone interface. The first switch 102 includes a first selection terminal, a second selection terminal, and a common terminal.

The first selection terminal of the first switch 102 is configured to be connected to a first microphone 103; the second selection terminal of the first switch 102 is configured to be connected to a second microphone 104; and the common terminal of the first switch 102 is connected to the first microphone interface of the audio processor.

The first microphone 103 is configured to receive a first audio signal.

The second microphone 104 is configured to receive a second audio signal.

The first switch 102 is configured to receive a first switching control signal, where under control of the first switching control signal, the first selection terminal of the first switch 102 is connected to the common terminal to send the first audio signal to the audio processor.

The first switch 102 is further configured to receive a second switching control signal, where under control of the second switching control signal, the second selection terminal of the first switch 102 is connected to the common terminal to send the second audio signal to the audio processor.

The first switching control signal and the second switching control signal are different enable signals, that is, at most one of the first selection terminal and the second selection terminal of the first switch 102 can be conductively connected to the common terminal at a same time. Operating states of the first switch 102 may include a first path being enabled and a second path being disabled, where the first selection terminal is conductively connected to the common terminal, and the second selection terminal is disconnected from the common terminal; the second path being enabled and the first path being disabled, where the first selection terminal is disconnected from the common terminal, and the second selection terminal is conductively connected to the common terminal; and both paths being disabled, where the first selection terminal is disconnected from the common terminal, and the second selection terminal is disconnected from the common terminal.

In a specific operation process, assuming that the system is applied to a terminal device, after the terminal device is powered on, a path of the first switch 102 is enabled by default, for example, the second selection terminal is conductively connected to the common terminal, that is, the second microphone 104 is connected to the first microphone interface of the audio processor by default. When the terminal device detects that a current usage scenario meets a preset condition, the second switch 105 receives the first switching control signal, so that the first selection terminal is connected to the common terminal, that is, the first microphone 103 is connected to the first microphone interface of the audio processor.

In this embodiment of the present disclosure, the first switch 102 is an analog switch, which may be a transistor switch, such as a metal-oxide-semiconductor field-effect transistor (MOSFET) switch, a complementary metal oxide semiconductor (CMOS) switch, or the like.

In this embodiment of the present disclosure, the audio processor may include a plurality of microphone interfaces. For example, the audio processor may include a codec analog core and a USB subsystem. The codec analog core is configured to perform analog signal processing such as amplification, filtering, frequency mixing, and the like. The USB subsystem is configured to manage USB interface communication. The USB subsystem includes a physical layer, a link layer, a transport layer, and the like, and is configured to ensure that data can be transmitted securely and efficiently through a USB interface. The USB subsystem supports USB Type-C digital communication, analog audio, DisplayPort auxiliary control, and battery charger communication.

It can be learned from the above-mentioned description that, according to the microphone control system provided in this embodiment of the present disclosure, the switch is provided, so that the microphone interface can be expanded despite the limited number of microphone channels in the audio processor, thereby accommodating connection of more microphones.

In an embodiment of the present disclosure, the audio processor further includes a plurality of third microphone interfaces. Each of the third microphone interfaces is configured to be directly connected to a single microphone, or to be connected to a plurality of microphones through a switch. The audio processor is further configured to receive, for each third microphone interface, a sixth audio signal that is sent by a microphone connected to the third microphone interface through the third microphone interface. The audio processor is further configured to process at least one sixth audio signal and the first audio signal or the second audio signal that is received by the audio processor through the first switch.

In an embodiment of the present disclosure, the number of microphones supported by the audio processor for connection is greater than the number of microphone interfaces of the audio processor.

Specifically, the audio processor includes a plurality of microphone interfaces, and the total number of microphone interfaces is limited, for example, the total number may be 5 or 6. However, the number of microphones required to be connected by the system is greater than the number of microphone interfaces that the audio processor can provide. Therefore, a switch is provided to be connected to the microphone interface, so that the number of microphones that can be connected to the microphone interface is increased. For example, originally a single microphone interface can only support connection of a single microphone, and after the switch is provided, a plurality of microphones can be connected to the same microphone interface through the switch. This enables the single microphone interface to support connection of the plurality of microphones under different circumstances. Although only one microphone can be enabled through the switch to be connected to a corresponding microphone interface at a same time, this configuration can effectively address a microphone interface waste caused by a microphone failure, or a requirement for selecting different microphones for different scenarios (For example, when ten microphones are provided, only five microphones located at the top of a mobile phone may be used based on specific usage scenarios. In this case, through control of the switch, only these five microphones can be connected to the audio processor.).

For example, an example in which the terminal device is a mobile phone is used. The audio processor of the mobile phone includes five interfaces. Five microphones of the mobile phone are distributed at preset positions on the mobile phone, where four microphones are directly connected to four interfaces of the audio processor in a one-to-one correspondence, one microphone is connected to the audio processor through a first selection terminal of a switch 1, and a second selection terminal of the switch 1 is connected to an earphone. When no earphone is inserted, the switch 1 enables a corresponding microphone, and the audio processor simultaneously processes audio from all of the five microphones, thereby achieving improved noise cancellation or environmental audio capture. When an earphone is inserted, the switch 1 enables the earphone, and the audio processor simultaneously processes audio received from both a microphone of the earphone and the other four microphones, thereby achieving enhanced voice pickup while simultaneously capturing environmental sound through the microphones of the mobile phone for combined audio processing.

In an embodiment of the present disclosure, based on the above-mentioned embodiments, for example, based on the embodiment shown in FIG. 1, the first microphone 103 is a microphone disposed in an external device; and the second microphone 104 is a microphone disposed in the terminal device.

In an embodiment of the present disclosure, the external device may be a loudspeaker, an audio recording device, or the like.

For example, an example in which the external device is a Type-C earphone is used, as shown in FIG. 2, the audio processor includes a plurality of analog-to-digital converters ADC1 to ADCx, where x is a positive integer greater than 1. The audio processor may provide five analog interfaces, that is, AMIC1, AMIC2, up to AMIC5. That is, in the related art, a maximum of only four microphones and one Type-C earphone can be supported for connection through these five analog interfaces. However, according to the microphone control system provided in this embodiment of the present disclosure, the first switch 102 is provided, so that the interface can be expanded. The interface originally used for connecting the Type-C earphone can now be made compatible with connecting a microphone. Specifically, the AMIC2 is connected to the first microphone 103 and the second microphone 104 through the first switch 102.

In an embodiment of the present disclosure, the system further includes: a second switch 105.

The audio processor further includes a second microphone interface. The second switch 105 includes a first selection terminal, a second selection terminal, and a common terminal.

The first selection terminal of the second switch 105 is configured to be connected to a third microphone 106. The second selection terminal of the second switch 105 is configured to be connected to a fourth microphone 107. The common terminal of the second switch 105 is connected to the second microphone interface of the audio processor.

The third microphone 106 is configured to receive a third audio signal.

The fourth microphone 107 is configured to receive a fourth audio signal.

The second switch 105 is configured to receive a third switching control signal, where under control of the third switching control signal, the first selection terminal of the second switch 105 is connected to the common terminal to send the third audio signal to the audio processor.

The second switch 105 is further configured to receive a fourth switching control signal, where under control of the fourth switching control signal, the second selection terminal of the second switch 105 is connected to the common terminal to send the fourth audio signal to the audio processor.

Specifically, the audio processor may include a plurality of microphone interfaces. Correspondingly, a plurality of switches may be provided to support connection of varying numbers of microphones. For example, assuming that a switch includes two paths, each switch provided may support connection of one extra microphone.

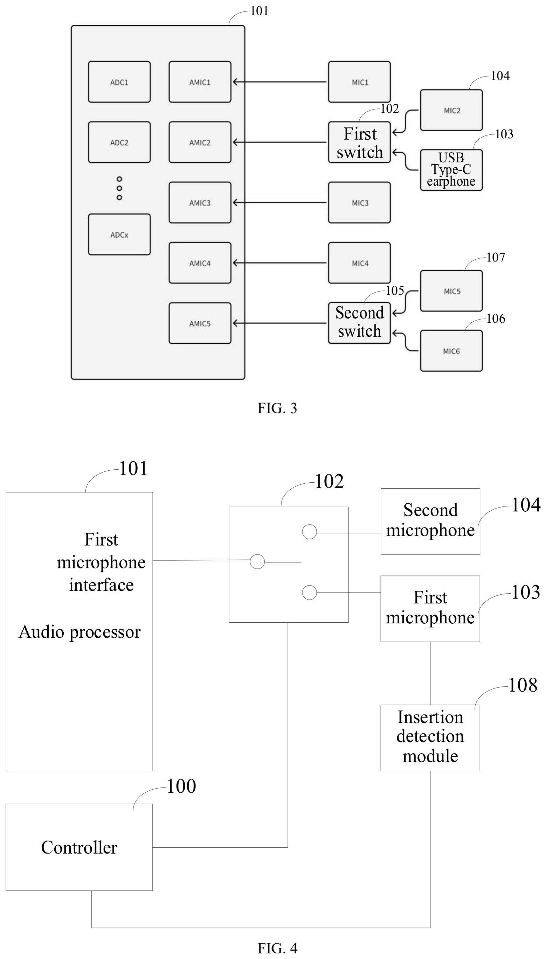

For example, an example in which the external device is a Type-C earphone is used, as shown in FIG. 3, the interface AMIC2 of the audio processor may be connected to the first switch 102 to connect the first microphone 103 and the second microphone 104, namely an MIC2 and a USB Type-C earphone. The interface AMIC5 of the audio processor is connected to the second switch 105 to connect the third microphone 106 and the fourth microphone 107, namely an MIC5 and an MIC6.

In an embodiment of the present disclosure, the first switch 102 further includes a third selection terminal.

The third selection terminal of the first switch 102 is configured to be connected to a fifth microphone.

The fifth microphone is configured to receive a fifth audio signal.

The first switch 102 is further configured to receive a fifth switching control signal, where under control of the fifth switching control signal, the third selection terminal of the first switch 102 is connected to the common terminal to send the fifth audio signal to the audio processor.

Specifically, to support connection of more microphones, a switch including more paths, for example, a switch that can support three paths, may be used. Based on this, each additional switch provided may support connection of two extra microphones.

In an embodiment of the present disclosure, to achieve automatic control for the switch, an insertion detection module may be provided to detect whether the external device is inserted, and the switch is controlled to be turned on or off based on a detection result. Specifically, the system further includes: an interface, an insertion detection module 108, and a controller 100. The interface is connected to the first selection terminal of the first switch 102 and the insertion detection module 108. The insertion detection module 108 is connected to the controller 100. The controller 100 is connected to the first switch 102. The insertion detection module 108 is configured to generate an external device insertion indication signal in response to detecting that the external device is inserted into the interface, and send the external device insertion indication signal to the controller 100. The controller 100 is configured to generate the first switching control signal based on the external device insertion indication signal, and send the first switching control signal to the first switch 102.

In an embodiment of the present disclosure, the external device may be an earphone, and the interface may be a Type-C interface or a 3.5 mm earphone interface.

In an embodiment of the present disclosure, the insertion detection module 108 may be configured as a standalone module, or may be integrated into another module, such as the audio processor.

In a possible implementation, an example in which the external device is an earphone is used. As shown in FIG. 4, the insertion detection module 108 detects whether the earphone corresponding to the first microphone 103 is inserted into the interface, and then generates an earphone insertion indication signal to be sent to the controller 100, so that the controller 100 generates the first switching control signal based on the earphone insertion indication signal, and sends the first switching control signal to the first switch 102. In this way, the first switch 102 connects the first microphone 103 to the first microphone interface of the audio processor, to enable normal operation of the earphone. Correspondingly, connection between the second microphone 104 and the first microphone interface is disconnected through the first switch 102.

In another possible implementation, the insertion detection module 108 may be integrated into the audio processor, in which case the audio processor may send the earphone insertion indication signal output by the insertion detection module 108 to the controller 100.

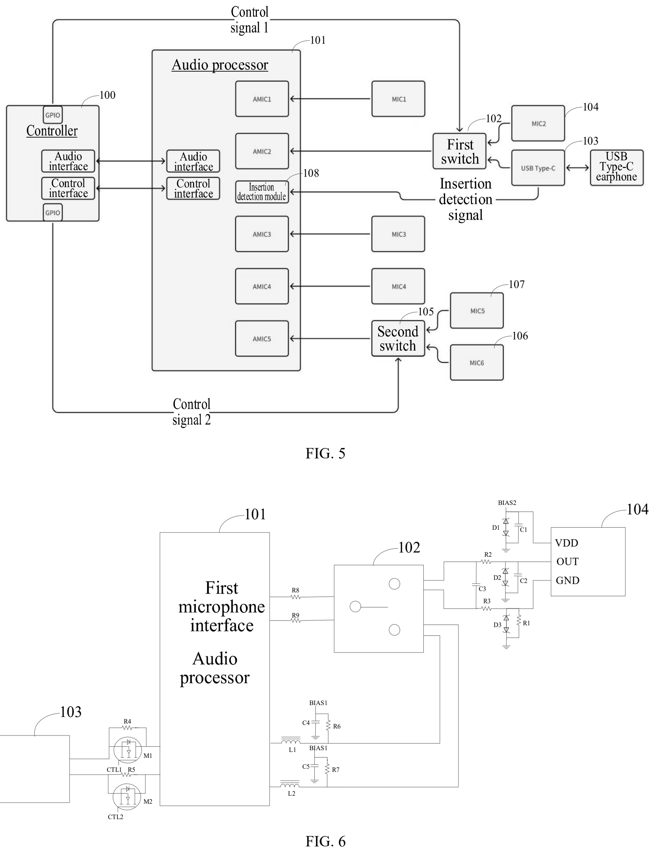

For example, as shown in FIG. 5, the insertion detection module 108 is integrated into the audio processor. The controller 100 is connected to the audio processor through an audio interface and a control interface. The controller 100 is connected to a control terminal of the first switch 102 and a control terminal of the second switch 105 through general purpose input/output ports (GPIO), so as to control the switches to perform path switching. The first switch 102 enables either the first microphone 103 or the second microphone 104, namely the MIC2 or the USB Type-C earphone. The second switch 105 enables either the third microphone 106 or the fourth microphone 107, namely the MIC5 or the MIC6. The control interface usually may be an I2C interface, an SPI interface, or an SPMI interface.

In an embodiment of the present disclosure, the insertion detection module 108 is further configured to generate an external device removal indication signal in response to detecting that the external device is removed from the interface, and send the external device removal indication signal to the controller 100. The controller 100 is further configured to generate the second switching control signal based on the external device removal indication signal, and send the second switching control signal to the first switch 102.

Specifically, one selection terminal of the first switch is connected to the microphone of the earphone, and another selection terminal of the first switch is connected to the microphone of the terminal device. By default, the first switch may be connected to the microphone of the terminal device. When the external device such as the earphone is inserted, the first switch may be connected to the microphone of the earphone and disconnected from the microphone of the terminal device. When the external device is removed, the first switch may be connected to the microphone of the terminal device again.

For example, as shown in FIG. 5, the first switch 102 is configured to connect the audio processor to the MIC2 by default. When the USB Type-C earphone is inserted, the audio processor detects the insertion operation through the insertion detection module 108, and then notifies the controller 100 through the control interface. The controller 100 then sends a control signal through the GPIO to switch the first switch 102, thereby connecting the audio processor to the Type-C earphone. When the USB Type-C earphone is removed, the audio processor detects the removal operation through the insertion detection module 108, and then notifies the controller 100 through the control interface. The controller 100 then sends a control signal through the GPIO again to switch the first switch 102, thereby connecting the audio processor to the MIC2.

In an embodiment of the present disclosure, both the first microphone 103 and the second microphone 104 are microphones disposed in the terminal device.

In an embodiment of the present disclosure, the system includes: the controller 100. The controller 100 is connected to the first switch 102. The controller 100 is configured to: determine a current usage scenario, and perform one of generating the first switching control signal based on the current usage scenario and sending the first switching control signal to the first switch 102, or generating the second switching control signal based on the current usage scenario and sending the second switching control signal to the first switch 102.

Specifically, the usage scenario may be determined based on information from an upper-layer application and/or a connection status of each microphone, and then switching control for the switch is performed based on the usage scenario. For example, when both selection terminals of the first switch 102 are connected to standalone microphones disposed in the terminal device, in response to detecting a user performs a touch operation on an answer control in a call interface, it is determined, based on an answer control signal generated in response to the touch operation, that the usage scenario of the terminal device is answering a call. In this scenario, a control signal (the first switching control signal or the second switching control signal) may be generated to control the switch to enable a microphone (the first microphone or the second microphone) that facilitates enhanced call reception and to connect the microphone to the audio processor, thereby adapting to the current call scenario.

An example in which the terminal device is a mobile phone is used. Usage scenarios may include the mobile phone being placed with the screen facing up, the mobile phone being placed with the screen facing down, the mobile phone being picked up, a microphone being occluded, and the like.

In an embodiment of the present disclosure, the current usage scenario of the terminal device may be determined in a plurality of manners.

In a possible implementation, a scenario in which whether a microphone is occluded may be identified based on environmental noise. Specifically, the controller 100 is connected to the audio processor. The first audio signal includes environmental noise. The audio processor is further configured to detect the environmental noise, and send a detection result to the controller 100. The controller 100 is further configured to determine the current usage scenario based on the detection result.

Specifically, when a microphone is occluded, environmental noise that can be detected decreases. Therefore, a threshold may be set, and when the environmental noise detected by the microphone is less than the threshold, it indicates that the microphone is occluded. In this case, there is a need to suspend the use of the microphone and control the switch to enable another microphone connected to the switch.

In another possible implementation, the system further includes a sensor. The controller 100 is connected to the sensor. The controller 100 is further configured to obtain sensor data collected by the sensor, and determine the current usage scenario based on the sensor data.

Specifically, the sensor may include a gyroscope, an accelerometer, a proximity sensor, and the like. The mobile phone is used as an example. During mobile phone holding detection, the accelerometer and the gyroscope in the mobile phone may detect movement and an orientation change of the mobile phone. When the mobile phone moves suddenly from a stationary state, these sensors may trigger an event to notify the system that the mobile phone has been picked up. The proximity sensor may detect whether the mobile phone is close to the ear or face of the user, which usually occurs during a phone call. Although this sensor is mainly used to automatically turn off the screen to prevent an accidental touch, this sensor may be further used to assist in detecting whether the mobile phone has been picked up.

In yet another possible implementation, a posture of the mobile phone may be determined based on a strength of a signal received by an antenna. When the strength of the signal received by the antenna is below a preset strength, it indicates that the antenna may be obstructed. Therefore, the use of a nearby microphone may be suspended, and the switch may be controlled to enable another unobstructed microphone.

In an embodiment of the present disclosure, the microphone may be disposed on the screen surface of the terminal device, on the surface opposite to the screen surface, on a side surface, or on the upper edge or lower edge of the screen. Specifically, the microphone may be disposed according to an actual requirement, which is not limited in the embodiments of the present disclosure.

The following describes a connection manner between modules by using examples with reference to the structural diagram of the microphone control system shown in FIG. 6.

As shown in FIG. 6, the first microphone interface of the audio processor is connected to the first switch 102 through resistors R8 and R9, the first switch 102 is connected to the second microphone 104 through resistors R1, R2, and R3, capacitors C2 and C3, and voltage regulator diodes D2 and D3, and a power terminal VDD of the second microphone 104 is connected to a BIAS2 through a C1 and a D1. The USB Type-C earphone includes the first microphone 103, and is connected to the audio processor through switching transistors M1 and M2 and resistors R4 and R5, with control terminal inputs CTL1 and CTL2 for the switching transistors. The audio processor is connected to the first switch 102 through inductors L1 and L2, resistors R6 and R7, and capacitors C4 and C5, and connected to a voltage BIAS1 through the R6 and the R7. The USB Type-C earphone may be bridge-connected to the first switch 102. The BIAS1 and the BIAS2 may be generated by the audio processor, and the CTL1 and the CTL2 may also be generated by the audio processor.

According to this embodiment of the present disclosure, the above-mentioned connection manner is used, so that more stable signals can be obtained with reduced noise.

An embodiment of the present disclosure further provides a terminal device, including the microphone control system according to the above-mentioned embodiment.

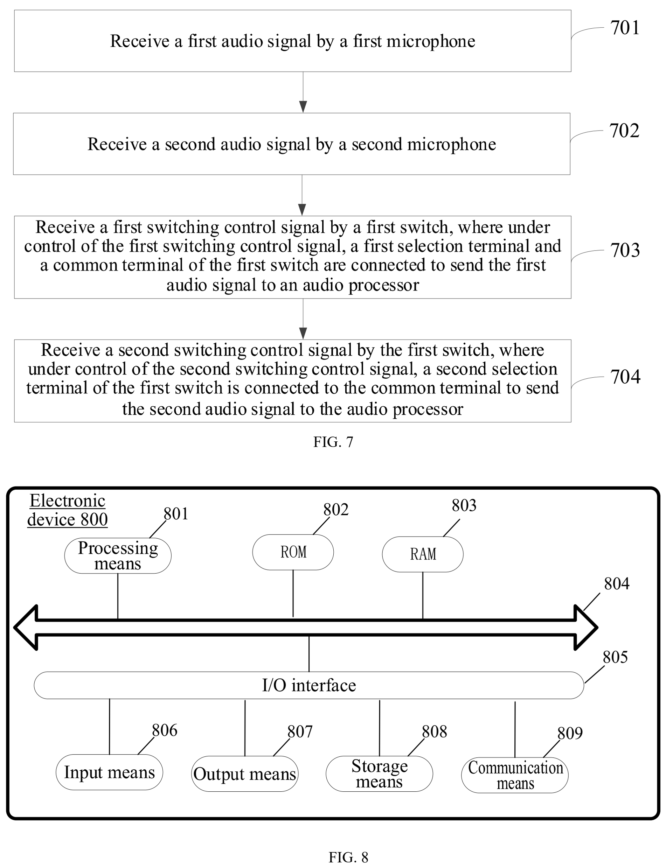

Corresponding to the microphone control system according to the above-mentioned embodiment, FIG. 7 is a schematic flowchart of a microphone control method according to an embodiment of the present disclosure. For ease of description, only parts related to this embodiment of the present disclosure are shown. With reference to FIG. 7, the method is applied to a microphone control system. The system includes: a first switch and an audio processor. The audio processor includes a first microphone interface. The first switch includes a first selection terminal, a second selection terminal, and a common terminal. The first selection terminal of the first switch is configured to be connected to a first microphone. The second selection terminal of the first switch is configured to be connected to a second microphone. The common terminal of the first switch is connected to the first microphone interface of the audio processor. The method includes the following steps.

701: Receive a first audio signal by the first microphone.

702: Receive a second audio signal by the second microphone.

703: Receive a first switching control signal by the first switch, where under control of the first switching control signal, the first selection terminal of the first switch is connected to the common terminal to send the first audio signal to the audio processor.

704: Receive a second switching control signal by the first switch, where under control of the second switching control signal, the second selection terminal of the first switch is connected to the common terminal to send the second audio signal to the audio processor.

It should be understood that steps 701 and 702 are optional steps. In some embodiments, the microphone control method according to the embodiment of the present disclosure may not include steps 701 and 702.

In an embodiment of the present disclosure, the system is applied to a terminal device. The first microphone is a microphone disposed in an external device. The second microphone is a microphone disposed in the terminal device.

In an embodiment of the present disclosure, the system further includes: an interface, an insertion detection module, and a controller. The interface is connected to the first selection terminal of the first switch and the insertion detection module. The insertion detection module is connected to the controller. The controller is connected to the first switch.

The method further includes: generating an external device insertion indication signal in response to detecting that the external device is inserted into the interface and sending the external device insertion indication signal to the controller by the insertion detection module; and generating the first switching control signal based on the external device insertion indication signal and sending the first switching control signal to the first switch by the controller.

In an embodiment of the present disclosure, the method further includes: generating an external device removal indication signal in response to detecting that the external device is removed from the interface and sending the external device removal indication signal to the controller by the insertion detection module; and generating the second switching control signal based on the external device removal indication signal and sending the second switching control signal to the first switch by the controller.

In an embodiment of the present disclosure, the system is applied to the terminal device. Both the first microphone and the second microphone are microphones disposed in the terminal device.

In an embodiment of the present disclosure, the system includes: a controller. The controller is connected to the first switch.

The method further includes: determining, by the controller, a current usage scenario, and performing, by the controller, one of generating the first switching control signal based on the current usage scenario and sending the first switching control signal to the first switch, or generating the second switching control signal based on the current usage scenario and sending the second switching control signal to the first switch.

In an embodiment of the present disclosure, the controller is connected to the audio processor. The first audio signal includes environmental noise. The method further includes: detecting the environmental noise and sending a detection result to the controller by the audio processor; and determining, by the controller, the current usage scenario includes: determining, by the controller, the current usage scenario based on the detection result.

In an embodiment of the present disclosure, the system further includes a sensor. The controller is connected to the sensor. Determining the current usage scenario by the controller includes: obtaining sensor data collected by the sensor and determining the current usage scenario based on the sensor data by the controller.

In an embodiment of the present disclosure, the system further includes: a second switch. The audio processor further includes a second microphone interface. The second switch includes a first selection terminal, a second selection terminal, and a common terminal. The first selection terminal of the second switch is configured to be connected to a third microphone. The second selection terminal of the second switch is configured to be connected to a fourth microphone. The common terminal of the second switch is connected to the second microphone interface of the audio processor. The third microphone is configured to receive a third audio signal. The fourth microphone is configured to receive a fourth audio signal.

The method further includes: receiving a third switching control signal by the second switch, where under control of the third switching control signal, the first selection terminal of the second switch is connected to the common terminal to send the third audio signal to the audio processor; and receiving a fourth switching control signal by the second switch, where under control of the fourth switching control signal, the second selection terminal of the second switch is connected to the common terminal to send the fourth audio signal to the audio processor.

In an embodiment of the present disclosure, the first switch further includes a third selection terminal. The third selection terminal of the first switch is configured to be connected to a fifth microphone. The fifth microphone is configured to receive a fifth audio signal.

The method further includes: receiving a fifth switching control signal through the first switch, where under control of the fifth switching control signal, the third selection terminal of the first switch is connected to the common terminal to send the fifth audio signal to the audio processor.

In an embodiment of the present disclosure, the audio processor further includes a plurality of third microphone interfaces. Each of the third microphone interfaces is configured to be directly connected to a single microphone, or to be connected to a plurality of microphones through a switch.

The method further includes: receiving, by the audio processor, for each third microphone interface, a sixth audio signal that is sent by a microphone connected to the third microphone interface through the third microphone interface; and processing, by the audio processor, at least one sixth audio signal and the first audio signal or the second audio signal that is received by the audio processor through the first switch.

The method provided in this embodiment may be applied to the microphone control system according to the above-mentioned method embodiment. The implementation principle and technical effects thereof are similar, and are not described herein again in this embodiment.

To implement the above-mentioned embodiments, an embodiment of the present disclosure further provides an electronic device.

FIG. 8 is a schematic structural diagram of an electronic device 800 suitable for implementing the embodiments of the present disclosure. The electronic device 800 may be a terminal device or a server. The terminal device may include, but is not limited to, a mobile terminal such as a mobile phone, a notebook computer, a digital broadcast receiver, a personal digital assistant (PDA), a tablet computer, a portable media player (PMP), and a vehicle-mounted terminal (such as a vehicle navigation terminal), and a fixed terminal such as a digital TV and a desktop computer. The electronic device shown in FIG. 8 is merely an example, and shall not impose any limitation on the function and scope of use of the embodiments of the present disclosure.

As shown in FIG. 8, the electronic device 800 may include a processing means (for example, a central processing unit or a graphics processing unit) 801 that may perform a variety of appropriate actions and processing based on a program stored in a read-only memory (ROM) 802 or a program loaded from a storage means 808 into a random access memory (RAM) 803. The RAM 803 further stores various programs and data required for the operation of the electronic device 800. The processing means 801, the ROM 802, and the RAM 803 are connected to one another through a bus 804. An input/output (I/O) interface 805 is also connected to the bus 804.

Generally, the following apparatuses may be connected to the I/O interface 805: an input means 806 including, for example, a touchscreen, a touchpad, a keyboard, a mouse, a camera, a microphone, an accelerometer, and a gyroscope; an output means 807 including, for example, a liquid crystal display (LCD), a speaker, and a vibrator; the storage means 808 including, for example, a magnetic tape and a hard disk drive; and a communication means 809. The communication means 809 may allow the electronic device 800 to perform wireless or wired communication with other devices to exchange data. Although FIG. 8 shows the electronic device 800 having various apparatuses, it should be understood that it is not required to implement or have all of the shown apparatuses. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication means 809, installed from the storage means 808, or installed from the ROM 802. When the computer program is executed by the processing means 801, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A microphone control system, **characterized in that** the system comprises: a first switch (102) and an audio processor (101), wherein
the audio processor (101) comprises a first microphone interface; the first switch (102) comprises a first selection terminal, a second selection terminal, and a common terminal;
the first selection terminal of the first switch (102) is configured to be connected to a first microphone (103);
the second selection terminal of the first switch (102) is configured to be connected to a second microphone (104); the common terminal of the first switch (102) is connected to the first microphone interface of the audio processor (101);
the first microphone (103) is configured to receive a first audio signal;
the second microphone (104) is configured to receive a second audio signal;
the first switch (102) is configured to receive a first switching control signal, wherein under control of the first switching control signal, the first selection terminal of the first switch (102) is connected to the common terminal to send the first audio signal to the audio processor (101); and
the first switch (102) is further configured to receive a second switching control signal, wherein under control of the second switching control signal, the second selection terminal of the first switch (102) is connected to the common terminal to send the second audio signal to the audio processor (101).

2. The system according to claim 1, wherein the system is applied to a terminal device; the first microphone (103) is a microphone disposed in an external device; and the second microphone (104) is a microphone disposed in the terminal device.

3. The system according to claim 2, wherein the system further comprises: an interface, an insertion detection module (108), and a controller (100), wherein
the interface is connected to the first selection terminal of the first switch (102) and the insertion detection module (108); the insertion detection module (108) is connected to the controller (100); the controller (100) is connected to the first switch (102);
the insertion detection module (108) is configured to generate an external device insertion indication signal in response to detecting that the external device is inserted into the interface, and send the external device insertion indication signal to the controller (100); and
the controller (100) is configured to generate the first switching control signal based on the external device insertion indication signal, and send the first switching control signal to the first switch (102).

4. The system according to claim 3, wherein the insertion detection module (108) is further configured to generate an external device removal indication signal in response to detecting that the external device is removed from the interface, and send the external device removal indication signal to the controller (100); and
the controller (100) is further configured to generate the second switching control signal based on the external device removal indication signal, and send the second switching control signal to the first switch (102).

5. The system according to claim 1, wherein the system is applied to a terminal device; and both the first microphone (103) and the second microphone (104) are microphones disposed in the terminal device.

6. The system according to any one of claims 1 to 5, wherein the system comprises: a controller (100), wherein
the controller (100) is connected to the first switch (102); and
the controller (100) is configured to: determine a current usage scenario, and perform one of generating the first switching control signal based on the current usage scenario and sending the first switching control signal to the first switch (102), or generating the second switching control signal based on the current usage scenario and sending the second switching control signal to the first switch (102).

7. The system according to claim 6, wherein the controller (100) is connected to the audio processor (101); the first audio signal comprises environmental noise;
the audio processor (101) is further configured to detect the environmental noise, and send a detection result to the controller (100); and
the controller (100) is further configured to determine the current usage scenario based on the detection result.

8. The system according to claim 6, wherein the system further comprises a sensor, wherein
the controller (100) is connected to the sensor; and
the controller (100) is further configured to obtain sensor data collected by the sensor, and determine the current usage scenario based on the sensor data.

9. The system according to any one of claims 1 to 5, wherein the system further comprises: a second switch (105);
the audio processor (101) further comprises a second microphone interface; the second switch (105) comprises a first selection terminal, a second selection terminal, and a common terminal;
the first selection terminal of the second switch (105) is configured to be connected to a third microphone (106); the second selection terminal of the second switch (105) is configured to be connected to a fourth microphone (107); the common terminal of the second switch (105) is connected to the second microphone interface of the audio processor (101);
the third microphone (106) is configured to receive a third audio signal;
the fourth microphone (107) is configured to receive a fourth audio signal;
the second switch (105) is configured to receive a third switching control signal, wherein under control of the third switching control signal, the first selection terminal of the second switch (105) is connected to the common terminal to send the third audio signal to the audio processor (101); and
the second switch (105) is further configured to receive a fourth switching control signal, wherein under control of the fourth switching control signal, the second selection terminal of the second switch (105) is connected to the common terminal to send the fourth audio signal to the audio processor (101).

10. The system according to any one of claims 1 to 5, wherein the first switch (102) further comprises a third selection terminal;
the third selection terminal of the first switch (102) is configured to be connected to a fifth microphone;
the fifth microphone is configured to receive a fifth audio signal; and
the first switch (102) is further configured to receive a fifth switching control signal, wherein under control of the fifth switching control signal, the third selection terminal of the first switch (102) is connected to the common terminal to send the fifth audio signal to the audio processor (101).

11. The system according to any one of claims 1 to 5, wherein the audio processor (101) further comprises a plurality of third microphone interfaces; each of the third microphone interfaces is configured to be directly connected to a single microphone, or to be connected to a plurality of microphones through a switch;
the audio processor (101) is further configured to receive, for each third microphone interface, a sixth audio signal that is sent by a microphone connected to the third microphone interface through the third microphone interface; and
the audio processor (101) is further configured to process at least one sixth audio signal and the first audio signal or the second audio signal that is received by the audio processor (101) through the first switch (102).

12. A terminal device, **characterized by** comprising the microphone control system according to any one of claims 1 to 11.

13. A microphone control method, applied to a microphone control system, **characterized in that** the system comprises: a first switch (102) and an audio processor (101); wherein the audio processor (101) comprises a first microphone interface; the first switch (102) comprises a first selection terminal, a second selection terminal, and a common terminal; the first selection terminal of the first switch (102) is configured to be connected to a first microphone (103); the second selection terminal of the first switch (102) is configured to be connected to a second microphone (104); the common terminal of the first switch (102) is connected to the first microphone interface of the audio processor (101); the first microphone (103) is configured to receive a first audio signal; and the second microphone (104) is configured to receive a second audio signal; and
the method comprises:
receiving a first switching control signal by the first switch (102), wherein under control of the first switching control signal, the first selection terminal of the first switch (102) is connected to the common terminal to send the first audio signal to the audio processor (101); and
receiving a second switching control signal by the first switch (102), wherein under control of the second switching control signal, the second selection terminal of the first switch (102) is connected to the common terminal to send the second audio signal to the audio processor (101).
